# EUROPEAN PATENT SPECIFICATION

(11) **EP 0 359 521 B1**
(45) Date of publication and mention of the grant of the patent: **21.06.1995**
(21) Application number: 89309242.9
(22) Date of filing: 12.09.1989
(51) Int. Cl.: C04B 41/46, C09D 195/00, C09D 5/00, C09D 121/00, C09D 153/02, C09J 195/00, C09J 121/00, C09J 153/02

(54) **Compositions and methods for waterproofing wet structures formed from water-penetrable or water-corrodible construction materials**
Zusammensetzungen und Verfahren zum Wasserdichtmachen von feuchten Strukturen aus wasserdurchlässigen oder -korrodierbaren Baumaterialien
Compositions et procédés pour imperméabiliser les structures humides formées à partir de matériaux de construction pénétrables ou corrodibles à l'eau

(30) Priority: 12.09.1988 US 243377; 09.08.1989 US 391333
(43) Date of publication of application: 21.03.1990
(73) Proprietor: W.R. Grace & Co.-Conn., New York, New York 10036 (US)
(72) Inventor: Gaidis, James Michael, Ellicott City Maryland 21043 (US)
(74) Representative: Bentham, Stephen

(56) References cited:
- EP-A- 0 238 149
- FR-A- 2 299 291
- GB-A- 567 096
- US-A- 3 625 807
- US-A- 3 741 856
- US-A- 4 272 582

## Description

The present invention relates to a composition and method useful for waterproofing or dampproofing various water-penetrable or water-corrodible materials used in building construction and other civil engineering projects. Specifically, the invention relates to a new primer composition and a method using this composition which eliminates the need for allowing construction materials to dry prior to applying waterproofing or dampproofing agents.

Various materials used in building construction and other civil engineering projects such as roads and bridges are susceptible to water penetration resulting either from their inherent properties or imperfections such as cracks or pores. Reducing or eliminating water penetration through structures formed of these materials often is desirable, and may be critical in certain structures such as those housing expensive electrical equipment or tunnels moving vehicular or pedestrian traffic under bodies of water. Minimizing or preventing water from coming in contact with steel and other metals which may corrode also is desirable. Available waterproofing agents include coal tar-based and asphalt-based compositions. Asphalt-based compositions are preferred; most preferred are preformed, single or multilayer sheets of waterproofing, asphalt-based adhesives such as described in U.S. Patent Nos. 3,741,856; 3,853,682; and 3,900,102. Bituthene^{(R)} brand of waterproofing membranes is an example of preferred, commercially available asphalt-based waterproofing agents.

Many currently available waterproofing agents are very effective when applied correctly. Correct application of currently available materials, however, requires that the structure be dry before the waterproofing agent is applied. Although waterproofing agents have been used for many years, for example, Bituthene^{(R)} has been used for approximately 20 years, no acceptable method for applying waterproofing materials to wet structures has been developed. Thus, inclement weather and the time required for curing of hydrophilic construction materials such as concrete result in delays which increase construction costs. Therefore, there has been and remains a need for compositions and methods which enable application of waterproofing agents to dry, wet, or incompletely cured construction materials.

U.S. Patent 4,172,830 to Rosenberg et al. is one of many examples of references disclosing sheet-like flexible materials used for waterproofing.

U.S. Patent 3,333,980 to McCord describes use of a very thin, oriented layer of fatty acid deposited on the surface of water-insoluble particles in aqueous media to render the particles hydrophobic and organophilic. Uses attributed to the invention described in this patent are surface treatment of pigments used in paint and cosmetic manufacture, and use as fillers and bonding agents in manufacture of refractories and plastics.

U.S. Patent 3,936,311 to Kirst et al. describes coating materials for buildings which renders the buildings water-repellent consisting of cement and/or lime, fillers, and water which contain, as a hydrophobing additive, 0.1-3% by weight of one or more water-soluble esters of saccharose and fatty acids preferably having 10-20 carbon atoms.

U.S. Patent 3,625,807 to Boemer describes an adhesive composition comprising a diene elastomer, for example, a butadiene-styrene copolymer, and a fatty acid in a volatile solvent. In these compositions, fatty acids are included as emulsifiers.

U.S. Patent 3,951,722 to Howson et al. discloses contact adhesive compositions including a polychloroprene and saturated hydroxy-carboxylic acid in an organic solvent.

U.S. Patent 4,283,316 to Bonsignore discloses treatment of alumina-hydrate to make its surface compatible with thermoplastic resins.

U.S. Patent 4,455,146 to Noda et al. teaches human skin applications for compositions including thermoplastic elastomers and higher fatty acids.

The present invention relates to a composition and method useful for attaching waterproofing agents to water-penetrable or water-corrodible construction materials. More specifically, the present invention relates to a new primer composition including C₈ to C₁₈ fatty acids and a method of using this composition to apply waterproofing agents to construction materials which may be wet, contaminated, or incompletely cured hydrophilic materials.

Optimum waterproofing of structures such as buildings, bridges, roads, and tunnels requires bonds between the structure and waterproofing agent which endure essentially for the life of the structure. These enduring bonds even are important in applications such as subterranean basements, where the backfill would hold the waterproofing agent in place, to prevent migration along the surface of the structure of water which may enter through damaged areas of the waterproofing agent. To achieve enduring bonds between structures and waterproofing agents, primers usually are applied prior to application of the waterproofing agent. None of the primers currently available provides sufficiently enduring bonds when applied to wet structures or structures of hydrophilic materials that are not yet cured.

The present invention resides in the discovery that adding certain fatty acids or combinations thereof to currently available waterproofing agent primers results in compositions which form sufficiently strong and enduring bonds between waterproofing agents and structures even when the primer is applied to a structure that is wet. As used herein, a wet structure is one that has moisture on its surface, moisture contained within that could migrate to its surface before an applied waterproofing agent primer was completely dried, or is constructed of a hydrophilic material, such as Portland cement concrete, that is incompletely cured. The fatty acids used in these compositions are fatty acids having from about 8 to about 18 carbon atoms and are straight-chain or branched, and may be saturated or unsaturated. Fatty acids having an even number of carbon atoms are preferred. Stearic, lauric, and palmitic acids are more preferred; myristic (tetradecanoic) acid is most preferred. The fatty acids used are synthesized by well known processes or are obtained from natural sources such as tall oil.

The present invention accordingly provides a waterproofing agent primer composition which can be used on wet and dry structures and which comprises:
a C₈ to C₁₈ fatty acid;
a binder selected from (1) asphalt and (2) a natural or synthetic rubber with diluent or filler resin; and an organic solvent in which the binder and fatty acid are soluble, the primer composition, when applied to a wet concrete structure at a coverage rate of from 5 to 10 square metres per litre, producing a 28-day bond strength with a subsequently applied asphalt-based waterproofing agent which bond strength is at least 33% of the bond strength produced when applied to a dry concrete structure.

The invented composition contains one or more C₈-C₁₈ fatty acids in an amount adequate to produce a sufficiently strong and enduring waterproofing agent-structure bond, determined as described below, when the primer composition is applied to a wet structure, preferably in a concentration of about 0.1% to about 6% weight-to-weight (w/w), more preferably in a concentration from about 0.1% to about 3% W/W, most preferably in a concentration of about 0.5% to about 1.5% W/W. The invented composition is prepared by mixing, preferably forming a solution of, an appropriate amount of one or more C₈-C₁₈ fatty acids with a conventional waterproofing agent primer.

Conventional waterproofing agent primers used in making the invented composition generally are mixtures of natural or synthetic rubbers, as binders, and diluent or filler resins in organic solvents. The rubbers which can be used include neoprene, butyl rubber, natural rubber or, styrene-butadiene random or block copolymers with block copolymers preferred. Other natural or synthetic rubbers useable in this invention are those that provide sufficient primer-structure adhesion and are known to and readily determinable by those skilled in the art and include chlorinated counterparts of the above-listed rubbers. Preferred amounts of natural or synthetic rubbers are about 1% to 25%; about 12% is most preferred when the rubber is a styrene-butadiene block copolymer. Optionally, the included rubber can be extended by addition of any of the standard oils used to extend rubbers. The amount of oil added is up to 66%; about 50% is preferred.

Other conventional waterproofing agent primers used in making the invented composition generally are mixtures of a hard asphalt, preferably having a softening point of at least about 80°C, more preferably at least about 110°C, and a penetration of 2 to 10 dmm, as a binder, in an organic solvent, preferably xylene. The solvent content of these primers preferably is about 50 to 70 weight percent for application to concrete and other porous construction materials, and about 70 to 80 weight percent for application to steel and other metals. These primers also may include rubbers, as listed above, preferably in amounts of up to about 15 percent by weight of the asphalt content. In such primers containing rubbers the preferred solvent content is 55 to 75 percent by weight for primers to be applied to concrete and other porous construction materials and 70 to 85 percent by weight for primers to be applied to steel.

The diluent or filler resins included in the primers generally are known to those skilled in the art and include hydrocarbon resins such as coumarone-indene resins, polyterpenes, and aromatic petroleum resins, optionally alkylated. Asphalt also is used as such a resin. Nevchem^{(R)}, a commercially available hardening resin series, is preferred.

The organic solvents in the conventional primers used to make the invented composition can be any organic solvent in which the binder and fatty acids to be used are soluble, i.e., sufficiently soluble to prepare primer compositions of the present invention. Such solvents generally are known or readily determinable by standard methods and include mineral spirits, ethers, alcohols, ketones, or, preferably, xylene.

The invented composition is used with known liquid or preformed solid waterproofing materials based on coal tar or asphalt. Asphalt-based waterproofing materials are preferred. Especially preferred are waterproofing materials constructed of preformed, multilayer, flexible sheets including an asphalt layer and a water-impenetrable polymeric film layer. Various flexible sheet waterproofing agents are commercially available. Bituthene^{(R)} brand waterproofing membranes are preferred commercially available waterproofing agents.

Various civil engineering structures including, for example, buildings, bridges, roads, and tunnels, are made waterproof using the present invention. As used herein, making a structure "waterproof" means reducing or eliminating the ability of water to penetrate a water-penetrable structure or reducing or eliminating the ability of water to come in contact with a surface of a structure made of water-corrodible materials. The present invention is used to make waterproof structures constructed of materials which are water-penetrable either inherently or as a result of imperfections such as cracks or pores. The types of water-penetrable construction materials with which the present invention is used include wood, brick, stone, blended cements, pozzolanic cements, or concrete, preferably Portland cement concrete. The types of water-corrodible construction materials with which the present invention is used include steel and other ferrous metals.

The present invention also provides a method for reducing water penetration through a structure, or minimising water coming into contact with a structure surface, which comprises applying to the structure a waterproofing agent primer composition according to the invention which can be used on wet and dry structures, and applying a waterproofing agent to the waterproofing agent primer.

Using the invented method, the primer preferably is applied to a structure surface at a coverage rate of from 5 to 10 square meters per liter, more preferably 6 to 8 square meters per liter, with a final film thickness of about 0.03 millimeters. The waterproofing agents subsequently affixed to the primer coated structure surface either are adhesive or non-adhesive. When non-adhesive waterproofing agents are used or when it is desirable to affix a non-adhesive surface of an adhesive waterproofing agent to the primer, the primer is made tacky by standard methods known in the art such as by using softer rubbers, using less resin, or using more oil in the rubber. In the most preferred method the structure to be waterproofed is coated with a fatty acid containing primer and then a single or multilayer sheet of waterproofing asphalt-based adhesive, preferably a sheet having a major exposed adhesive surface and a second major exposed non-adhesive surface, such as Bituthene^{(R)} brand of waterproofing membrane, is applied so that an adhesive surface of the waterproofing agent is in contact with the primer. In some applications, however, it may be desirable to apply such sheets of waterproofing agents so that a non-adhesive surface of the waterproofing agent is in contact with the primer-coated structure surface.

The Example 4 procedure is used to determine whether a primer applied to a wet structure surface has the ability to produce a sufficiently strong and enduring bond between the waterproofing agent and structure surface. Using this test, primers applied to wet structure surfaces that at 28 days produce waterproofing agent-structure bond strengths that are at least 33% of, preferably at least 50% of, more preferably at least 66% of the bond strengths produced when applied to dry structure surfaces are defined as producing sufficiently strong and durable bonds to enable their use in the invention. As used herein, primers meeting these criteria are referred to as primers which can be used on wet and dry structures.

In making the above described invention, the inventor was surprised to discover that the surface active properties of fatty acids alone apparently are not the basis for their utility in primers which can be satisfactorily applied to wet structures. The inventor initially tested a variety of other surface active agents such as Pluronic L-92, Pluronic 25 R-2 (both non-ionic surfactants) and Bitran H (a cationic surfactant), and discovered that none of them when added to primers applied to wet structures resulted in bonds between the structures and waterproofing agents of sufficient strength and durability. As a result, although not intending to be bound to any particular mechanism by which the fatty acids produced the unexpected results, it is believed that the fatty acid primers are operable even when applied to wet structures because the fatty acids produce a chemical bond between the structure, particularly alkaline structures such as concrete, and the primer. "Bitran" and "Pluronic" referred to above are Trade Marks.

### Example 1

### Primer Containing Myristic Acid

Myristic acid (1%) was mixed using a sonic bath into commercially available Bituthene^{(R)} P-3000 primer. The composition thus prepared contained 1% myristic acid, about 12% styrene-butadiene block copolymer extended 50% with oil, and 12% Nevchem^{(R)} 140 (alkylated aromatic non-saponifiable petroleum hydrocarbon resin with softening point of about 140°C) in xylene. The composition thus prepared was applied and tested according to the procedure described in Example 3, and the results are shown in Tables I and II, below.

### Example 2

### Primer Containing Stearic Acid

A composition similar to that described in Example 1 was prepared by adding stearic acid (1%) to Bituthene^{(R)} P-3000 primer. This composition also was applied and tested as described in Example 3, and the results of such testing are displayed in Tables I and II, below.

### Example 3

### Primer Containing Asphalt and Myristic Acid

Myristic Acid (1%), asphalt (45%), and xylene (54%) were mixed to yield a waterproofing agent primer composition.

### Example 4

### Bond Strength Testing Procedure

The building material used in this testing procedure are porous concrete blocks (19.05cm by 39.37cm, by 3.81cm thick (7½ inches by 15½ inches, by 1½ inches thick)) obtainable from a conventional building materials supplier. The blocks first are saturated with water and then a paste of Type I cement is applied to produce a uniform layer. The pasted blocks to be used in wet-surface testing then are cured in a 100% relative humidity environment for at least seven days and dried before use.

For testing, the block surface is divided into 3 equivalent sections and 4 grams of primer are applied to each section (6 sq. meter/liter). Dry blocks are primed and allowed 4 hours drying time. Some blocks are wetted and primed in water 0.32cm (1/8 inch) below the block surface; also 7.6 mL of water was poured onto the surface (100 mL/sq. meter). The primed wet block then was removed from water and allowed to dry for 4 hours.

Each section of the wet and dry primed blocks then receives two 5.08cm x 17.78cm (2" x 7") strips of Bituthene-3000 which are rolled 3 times with a 9.46 kg (20.85 lb) roller. The primed, wet block is submerged in water and the dry, primed block is kept dry until bond strength is tested. At selected times bond strength between the Bituthene^{(R)} and blocks is measured using 90° angle, 5.08cm/minute (2"/minute) tensile testing machine.

Table I shows bond strength between Bituthene^{(R)} brand waterproofing membrane and pasted block at 14 days following application to dry or wet blocks using Bituthene^{(R)} P-3000 primer with or without added fatty acids.

**TABLE I**

| Fatty Acid Content | Bond Strength (kg/cm(lb/in)) - 14 days | |
|---|---|---|
| | Dry | Wet |
| 1% Myristic | 2.20(12.3) | 1.29(7.2) |
| 1% Myristic | 2.38(13.3) | 1.61(9.0) |
| 1% Myristic | 2.50(14.0) | 2.00(11.2) |
| 1% Myristic | 2.14(12.0) | 1.57(8.8) |
| 1% Stearic | 2.02(11.3) | 0.82(4.6) |
| 1% Stearic | 2.02(11.3) | 0.54(3.0) |
| 1% Stearic | 2.55(14.3) | 1.61(9.0) |
| 1% Stearic | 2.41(13.5) | 1.34(7.5) |
| None | 2.38(13.3) | 0.05(0.3) |
| None | 2.29(12.8) | 0.43(2.4) |
| None | 1.96(11.0) | 0.30(1.7) |
| None | 2.11(11.8) | 0.36(2.0) |

Table II shows bond strength between Bituthene^{(R)} brand waterproofing membrane and pasted block at 14 and 28 days following application to dry or wet block using Bituthene^{(R)} P-3000 primer with or without added fatty acids.

**TABLE II**

| Fatty Acid Content | Bond Strength (kg/cm(lb/in)) | | | |
|---|---|---|---|---|
| | 14 Days | | 28 Days | |
| | Dry | Wet | Dry | Wet |
| 1% Myristic | 2.30(12.9) | 1.63(9.1) | 2.38(13.3) | 1.82(10.2) |
| 1% Stearic | 2.25(12.6) | 1.07(6.0) | 2.14(12.0) | 1.45(8.1) |
| None | 2.18(12.2) | 0.29(1.6) | 2.18(12.2) | 0.34(1.9) |

Table III shows bond strength between Bituthene^{(R)} brand waterproofing membrane and pasted block at 28 and 120 days following application to dry or wet block using Bituthene^{(R)} P-3000 primer with different concentrations of various straight chain, saturated fatty acids.

**TABLE III**

| Fatty Acid | Fatty Acid Concentration (%) | Bond Strength (kg/cm(lb/in)) | | | |
|---|---|---|---|---|---|
| | | 28 Days | | 120 Days | |
| | | Dry | Wet | Dry | Wet |
| C₆ | .25 | 2.11(11.8) | 0.55(3.1) | 2.50(14.0) | 0.61(3.4) |
| | 1.0 | 2.25(12.6) | 0.23(1.3) | 2.66(14.9) | 0.48(2.7) |
| | 2.0 | 2.39(13.4) | 0.98(5.5) | 2.05(11.5) | 0.50(2.8) |
| C₈ | .25 | 2.13(11.9) | 0.89(5.0) | 2.20(12.3) | 0.98(5.5) |
| | 1.0 | 1.32(7.4) | 0.89(5.0) | 1.86(10.4) | 0.95(5.3) |
| | 2.0 | 1.36(7.6) | 0.23(1.3) | 2.11(11.8) | 0.59(3.3) |
| C₁₀ | .25 | 2.20(12.3) | 1.45(8.1) | 2.61(14.6) | 0.91(5.1) |
| | 1.0 | 1.68(9.4) | 0.41(2.3) | 2.05(11.5) | 0.34(1.9) |
| | 2.0 | 1.57(8.8) | 0.63(3.5) | 2.02(11.3) | 0.89(5.0) |
| C₁₂ | .25 | 1.64(9.2) | 2.07(11.6) | 1.96(11.0) | 0.54(3.0) |
| | 1.0 | 1.36(7.6) | 1.61(9.0) | 1.66(9.3) | 0.25(1.4) |
| | 2.0 | 0.79(4.4) | 2.43(13.6) | 1.79(10.0) | 1.79(10.0) |
| C₁₄ | .25 | 0.93(5.2) | 0.88(4.9) | 1.75(9.8) | 1.61(9.0) |
| | 1.0 | 2.38(13.3) | 1.82(10.2) | 2.32(13.0) | 1.43(8.0) |
| | 2.0 | 0.34(1.9) | 2.38(13.3) | 2.29(12.8) | 2.11(11.8) |
| C₁₆ | .25 | 1.71(9.6) | 1.05(5.9) | 2.11(11.8) | 0.70(3.9) |
| | 1.0 | 1.88(10.5) | 2.02(11.3) | 1.86(10.4) | 1.89(10.6) |
| | 2.0 | 1.57(8.8) | 1.45(8.1) | 1.86(10.4) | 0.88(4.9) |
| C₁₈ | .25 | 0.64(3.6) | 0.32(1.8) | 1.66(9.3) | 0.91(5.1) |
| | 1.0 | 2.14(12.0) | 1.45(8.1) | - | 0.77(4.3) |
| | 2.0 | 0.32(1.8) | 0.46(2.6) | 1.54(8.6) | 0.32(1.8) |
| None* | | 1.83(10.27) | 0.37(2.06) | 2.04(11.42) | 0.42(2.36) |
| | | ±0.63(±3.55) | ±0.25(±1.42) | ±0.24(±1.36) | ±0.31(±1.72) |

| | | | | | |
|---|---|---|---|---|---|
| *Average of 22 for 28 days, 30 for 120 days | | | | | |

## Claims (Claims for the following Contracting State(s): AT, BE, CH, DE, FR, GB, GR, IT, LI, LU, NL, SE)

1. A waterproofing agent primer composition which can be used on wet and dry structures and which comprises:
a C₈ to C₁₈ fatty acid;
a binder selected from (1) asphalt and (2) a natural or synthetic rubber with diluent or filler resin; and
an organic solvent in which the binder and fatty acid are soluble, the primer composition, when applied to a wet concrete structure at a coverage rate of from 5 to 10 square metres per litre, producing a 28-day bond strength with a subsequently applied asphalt-based waterproofing agent which bond strength is at least 33% of the bond strength produced when applied to a dry concrete structure.

2. A waterproofing agent primer composition according to claim 1 wherein the binder is a natural or synthetic rubber with diluent or filler resin.

3. A waterproofing agent primer composition according to claim 1 or 2 which comprises 0.1% to 6% w/w of a C₈ to C₁₈ fatty acid.

4. A waterproofing agent primer composition according to claim 1,2 or 3 which comprises 0.1% to 3% w/w of a C₈-to C₁₈ fatty acid.

5. A waterproofing agent primer composition according to any one of the preceding claims which comprises 0.5 to 1.5% w/w of a C₈ to C₁₈ fatty acid.

6. A waterproofing agent primer composition according to any one of the preceding claims in which the C₈ to C₁₈ fatty acid comprises myristic acid, stearic acid, lauric acid, palmitic acid, or a tall oil fatty acid.

7. A waterproofing agent primer composition according to any one of the preceding claims which comprises a natural or synthetic rubber selected from styrene-butadiene block copolymer and styrene-butadiene random copolymer.

8. A waterproofing agent primer composition according to any one of the preceding claims which comprises an alkylated aromatic petroleum hydrocarbon resin.

9. A waterproofing agent primer composition according to any one of the preceding claims where in the organic solvent is xylene or a mineral spirit.

10. A waterproofing agent primer composition according to claim 1 which comprises:
myristic acid;
styrene-butadiene block copolymer;
an alkylated aromatic petroleum hydrocarbon resin; and
xylene.

11. A waterproofing agent primer composition according to claim 10 wherein
myristic acid is present in a concentration of 1% w/w; and
styrene-butadiene block copolymer is present in a concentration of 12%.

12. A waterproofing agent primer composition according to any one of claims 1 to 9 which comprises asphalt having a softening point of at least 80°C.

13. A waterproofing agent primer composition according to claim 12 further comprising a natural or synthetic rubber in an amount up to about 15% w/w of the asphalt content.

14. A waterproofing agent primer composition according to any one of the preceding claims which comprises 50% to 85% w/w of organic solvent.

15. A method for reducing water penetration through a structure or minimizing water coming into contact with a structure surface which comprises
applying to the structure a waterproofing agent primer composition which can be used on wet and dry structures and which comprises:
a C₈ to C₁₈ fatty acid;
a binder selected from (1) asphalt and (2) a natural or synthetic rubber with diluent or filler resin; and an organic solvent in which the binder and fatty acid are soluble; and
applying a waterproofing agent to the waterproofing agent primer,
wherein when the primer composition is applied to a wet concrete structure at a coverage rate of from 5 to 10 square metres per litre, it produces a 28-day bond strength with the waterproofing agent which is at least 33% of the bond strength produced when applied to a dry concrete structure.

16. A method according to claim 15 wherein the waterproofing agent is an asphalt-containing, preformed, multilayer, flexible sheet.

17. A method according to claim 15 or 16 wherein the waterproofing agent primer comprises:
a C₈ to C₁₈ fatty acid;
a natural or synthetic rubber;
a hardening resin; and
an organic solvent in which the fatty acid is soluble.

18. A method according to claim 15, 16 or 17 wherein the waterproofing agent primer composition is a composition according to any one of claims 2 to 14.

19. A method according to any one of claims 15 to 18 wherein the waterproofing agent primer composition comprises
asphalt having a softening point of at least 110°C; and
xylene in a concentration of from 50 to 85% w/w.

## Claims (Claims for the following Contracting State(s): ES)

1. A process for preparing a waterproofing agent primer composition which can be used on wet and dry structures, which process comprises mixing a C₈ to C₁₈ fatty acid with a precursor composition comprising:
a binder selected from (1) asphalt and (2) a natural or synthetic rubber with diluent or filler resin; and
an organic solvent in which the binder and fatty acid are soluble;
the primer composition, when applied to a wet concrete structure at a coverage rate of from 5 to 10 square metres per litre, producing a 28-day bond strength with a subsequently applied asphalt-based waterproofing agent which bond strength is at least 33% of the bond strength produced when applied to a dry concrete structure.

2. A process according to claim 1 wherein the binder is a natural or synthetic rubber with diluent or filler resin.

3. A process according to claim 1 or 2 in which a fatty acid is used in an amount to provide 0.1% to 6% w/w of a C₈ to C₁₈ fatty acid in the primer composition.

4. A process according to claim 1, 2 or 3 in which a fatty acid is used in an amount to provide 0.1% to 3% w/w of a C₈ to C₁₈ fatty acid in the primer composition.

5. A process according to any one of the preceding claims in which a fatty acid is used in an amount to provide 0.5 to 1.5% w/w of a C₈ to C₁₈ fatty acid in the primer composition.

6. A process according to any one of the preceding claims in which the C₈ to C₁₈ fatty acid comprises myristic acid, stearic acid, lauric acid, palmitic acid, or a tall oil fatty acid.

7. A process according to any one of the preceding claims in which the precursor composition comprises a natural or synthetic rubber selected from styrene-butadiene block copolymer and styrene-butadiene random copolymer.

8. A process according to any one of the preceding claims in which the precursor composition comprises an alkylated aromatic petroleum hydrocarbon resin.

9. A process according to any one of the preceding claims wherein the precursor composition comprises an organic solvent which is xylene or a mineral spirit.

10. A process according to claim 1 which comprises mixing myristic acid with a precursor composition comprising:
styrene-butadiene block copolymer;
an alkylated aromatic petroleum hydrocarbon resin; and
xylene.

11. A process according to claim 10 wherein myristic acid is present in a concentration of 1% w/w; and
styrene-butadiene block copolymer is present in a concentration of 12% in the primer composition.

12. A process according to any one of claims 1 to 9 in which the precursor composition comprises asphalt having a softening point of at least 80°C.

13. A process according to claim 12 in which the precursor composition further comprises a natural or synthetic rubber in an amount to provide up to about 15% w/w of the asphalt in the primer composition.

14. A process according to any one of the preceding claims in which the precursor composition comprises organic solvent in an amount to provide 50% to 85% w/w of organic solvent in the primer composition.

15. A method for reducing water penetration through a structure or minimizing water coming into contact with a structure surface which comprises
applying to the structure a waterproofing agent primer composition according to claim 1 which can be used on wet and dry structure and which comprises: a C₈ to C₁₈ fatty acid;
a binder selected from (1) asphalt and (2) a natural or synthetic rubber with diluent or filler resin; and
an organic solvent in which the binder and fatty acid are soluble; and
applying a waterproofing agent to the waterproofing agent primer,
wherein when the primer composition is applied to a wet concrete structure at a coverage rate of from 5 to 10 square metres per litre, it produces a 28-day bond strength with the waterproofing agent which is at least 33% of the bond strength produced when applied to a dry concrete structure.

16. A method according to claim 15 wherein the waterproofing agent is an asphalt-containing, preformed, multilayer, flexible sheet.

17. A method according to claim 15 or 16 wherein the waterproofing agent primer comprises:
a C₈ to C₁₈ fatty acid;
a natural or synthetic rubber;
a hardening resin; and
an organic solvent in which the fatty acid is soluble.

18. A method according to claim 15, 16 or 17 wherein the waterproofing agent primer composition is a composition according to any one of claims 2 to 14.

19. A method according to any one of claims 15 to 18 wherein the waterproofing agent primer composition comprises
asphalt having a softening point of at least 110°C; and
xylene in a concentration of from 50 to 85% w/w.

## Patentansprüche (Patentansprüche für folgende(n) Vertragsstaat(en): AT, BE, CH, DE, FR, GB, GR, IT, LI, LU, NL, SE)

1. Grundierungszusammensetzung für ein wasserdichtmachendes Mittel, die auf nassen und trockenen Strukturen verwendet werden kann und umfaßt:
C₈- bis C₁₈-Fettsäure,
Bindemittel ausgewählt aus (1) Asphalt und (2) einem natürlichen oder synthetischen Kautschuk mit Verdünnungs- oder Füllharz, und
organisches Lösungsmittel, in dem das Bindemittel und die Fettsäure löslich sind,
wobei die Grundierungszusammensetzung, wenn sie auf eine nasse Betonstruktur mit einer Abdeckungsrate von 5 bis 10 m²/l aufgebracht worden ist, eine 28-Tage-Bindungsfestigkeit mit einem anschließend aufgebrachten, auf Asphalt basierenden, wasserdichtmachenden Mittel erzeugt wird, die mindestens 33 % der Bindungsfestigkeit ausmacht, die erzeugt wird, wenn sie auf eine trockene Betonstruktur aufgebracht worden ist.

2. Grundierungszusammensetzung für ein wasserdichtmachendes Mittel nach Anspruch 1, bei der das Bindemittel ein natürlicher oder synthetischer Kautschuk mit Verdünnungs- oder Füllharz ist.

3. Grundierungszusammensetzung für ein wasserdichtmachendes Mittel nach Anspruch 1 oder 2, die 0,1 % bis 6 % Gew./Gew. einer C₈- bis C₁₈-Fettsäure umfaßt.

4. Grundierungszusammensetzung für ein wasserdichtmachendes Mittel nach Anspruch 1, 2 oder 3, die 0,1 % bis 3 % Gew./Gew. einer C₈- bis C₁₈-Fettsäure umfaßt.

5. Grundierungszusammensetzung für ein wasserdichtmachendes Mittel nach einem der vorhergehenden Ansprüche, die 0,5 bis 1,5 % Gew./Gew. einer C₈- bis C₁₈-Fettsäure umfaßt.

6. Grundierungszusammensetzung für ein wasserdichtmachendes Mittel nach einem der vorhergehenden Ansprüche, bei der die C₈- bis C₁₈-Fettsäure Myristinsäure, Stearinsäure, Laurinsäure, Palmitinsäure oder eine Tallölfettsäure umfaßt.

7. Grundierungszusammensetzung für ein wasserdichtmachendes Mittel nach einem der vorhergehenden Ansprüche, die einen natürlichen oder synthetischen Kautschuk ausgewählt aus Styrol/Butadien-Blockcopolymer und statistischem Styrol/Butadien-Copolymer umfaßt.

8. Grundierungszusammensetzung für ein wasserdichtmachendes Mittel nach einem der vorhergehenden Ansprüche, die ein alkyliertes, aromatisches Erdölkohlenwasserstoffharz umfaßt.

9. Grundierungszusammensetzung für ein wasserdichtmachendes Mittel nach einem der vorhergehenden Ansprüche, bei der das organische Lösungsmittel Xylol oder ein Mineralspiritus ist.

10. Grundierungszusammensetzung für ein wasserdichtmachendes Mittel nach Anspruch 1, die umfaßt:
Myristinsäure,
Styrol/Butadien-Blockcopolymer,
alkyliertes, aromatisches Erdölkohlenwasserstoffharz und Xylol.

11. Grundierungszusammensetzung für ein wasserdichtmachendes Mittel nach Anspruch 10, bei der
Myristinsäure in einer Konzentration von 1 % Gew./Gew. vorhanden ist und
Styrol/Butadien-Blockcopolymer in einer Konzentration von 12 % vorhanden ist.

12. Grundierungszusammensetzung für ein wasserdichtmachendes Mittel nach einem der vorhergehenden Ansprüche 1 bis 9, die Asphalt mit einem Erweichungspunkt von mindestens 80 °C umfaßt.

13. Grundierungszusammensetzung für ein wasserdichtmachendes Mittel nach Anspruch 12, die ferner einen natürlichen oder synthetischen Kautschuk in einer Menge von bis zu etwa 15 % Gew./Gew. des Asphaltgehalts umfaßt.

14. Grundierungszusammensetzung für ein wasserdichtmachendes Mittel nach einem der vorhergehenden Ansprüche, die 50 % bis 85 % Gew./Gew. organisches Lösungsmittel umfaßt.

15. Verfahren zur Verringerung der Penetration von Wasser durch eine Struktur oder zur Minimierung des Wassers, das mit einer Strukturoberfläche in Kontakt gelangt, bei dem
auf die Struktur eine Grundierungszusammensetzung für ein wasserdichtmachendes Mittel aufgebracht wird, die auf nassen und trockenen Strukturen verwendet werden kann und umfaßt: C₈- bis C₁₈-Fettsäure,
Bindemittel ausgewählt aus (1) Asphalt und (2) einem natürlichen oder synthetischen Kautschuk mit Verdünnungs- oder Füllharz, und
organisches Lösungsmittel, in dem das Bindemittel und die Fettsäure löslich sind, und
ein wasserdichtmachendes Mittel auf die Grundierung für ein wasserdichtmachendes Mittel aufgebracht wird,
bei dem, wenn die Grundierungszusammensetzung auf eine nasse Betonstruktur mit einer Abdeckungsrate von 5 bis 10 m²/l aufgebracht wird, sie eine 28-Tage-Bindungsfestigkeit mit dem wasserabdichtenden Mittel erzeugt, die mindestens 33 % der Bindungsfestigkeit beträgt, die erzeugt wird, wenn sie auf eine trockene Betonstruktur aufgebracht wird.

16. Verfahren nach Anspruch 15, bei dem das wasserdichtmachende Mittel eine Asphalt enthaltende, vorgeformte, mehrschichtige flexible Folie ist.

17. Verfahren nach Anspruch 15 oder 16, bei dem die Grundierung für ein wasserdichtmachendes Mittel umfaßt:
C₈- bis C₁₈-Fettsäure,
natürlichen oder synthetischen Kautschuk,
Härtungsharz und
organisches Lösungsmittel, in dem die Fettsäure löslich ist.

18. Verfahren nach Anspruch 15, 16 oder 17, bei dem die Grundierungszusammensetzung für ein wasserdichtmachendes Mittel eine Zusammensetzung gemäß einem der Ansprüche 2 bis 14 ist.

19. Verfahren nach einem der Ansprüche 15 bis 18, bei dem die Grundierungszusammensetzung für ein wasserdichtmachendes Mittel umfaßt:
Asphalt mit einem Erweichungspunkt von mindestens 110 °C und Xylol in einer Konzentration von 50 bis 85 % Gew./Gew.

## Patentansprüche (Patentansprüche für folgende(n) Vertragsstaat(en): ES)

1. Verfahren zur Herstellung einer Grundierungszusammensetzung für ein wasserdichtmachendes Mittel, die auf nassen und trockenen Strukturen verwendet werden kann, bei dem C₈- bis C₁₈-Fettsäure mit einer Vorläuferzusammensetzung gemischt wird, die umfaßt:
Bindemittel ausgewählt aus (1) Asphalt und (2) einem natürlichen oder synthetischen Kautschuk mit Verdünnungs- oder Füllharz, und organisches Lösungsmittel, in dem das Bindemittel und die Fettsäure löslich sind,
wobei die Grundierungszusammensetzung, wenn sie auf eine nasse Betonstruktur mit einer Abdeckungsrate von 5 bis 10 m²/l aufgebracht wird, eine 28-Tage-Bindungsfestigkeit mit einem anschließend aufgebrachten, auf Asphalt basierenden, wasserdichtmachenden Mittel erzeugt, die mindestens 33 % der Bindungsfestigkeit beträgt, die erzeugt wird, wenn sie auf eine trockene Betonstruktur aufgebracht wird.

2. Verfahren nach Anspruch 1, bei dem das Bindemittel ein natürlicher oder synthetischer Kautschuk mit Verdünnungs- oder Füllharz ist.

3. Verfahren nach Anspruch 1 oder 2, bei dem Fettsäure in einer Menge verwendet wird, um 0,1 % bis 6 % Gew./Gew. C₈- bis C₁₈-Fettsäure in der Grundierungszusammensetzung zu liefern.

4. Verfahren nach Anspruch 1, 2 oder 3, bei dem Fettsäure in einer Menge verwendet wird, um 0,1 % bis 3 % Gew./Gew. C₈-bis C₁₈-Fettsäure in der Grundierungszusammensetzung zu liefern.

5. Verfahren nach einem der vorhergehenden Ansprüche, bei dem Fettsäure in einer Menge verwendet wird, um 0,5 bis 1,5 % Gew./Gew. C₈- bis C₁₈-Fettsäure in der Grundierungszusammensetzung zu liefern.

6. Verfahren nach einem der vorhergehenden Ansprüche, bei dem die C₈- bis C₁₈-Fettsäure Myristinsäure, Stearinsäure, Laurinsäure, Palmitinsäure oder eine Tallölfettsäure umfaßt.

7. Verfahren nach einem der vorhergehenden Ansprüche, bei dem die Vorläuferzusammensetzung natürlichen oder synthetischen Kautschuk ausgewählt aus Styrol/Butadien-Blockcopolymer und statistischem Styrol/Butadien-Copolymer umfaßt.

8. Verfahren nach einem der vorhergehenden Ansprüche, bei dem die Vorläuferzusammensetzung alkyliertes, aromatisches Erdölkohlenwasserstoffharz umfaßt.

9. Verfahren nach einem der vorhergehenden Ansprüche, bei dem die Vorläuferzusammensetzung organisches Lösungsmittel umfaßt, das Xylol oder ein Mineralspiritus ist.

10. Verfahren nach Anspruch 1, bei dem Myristinsäure mit einer Vorläuferzusammensetzung gemischt wird, die:
Styrol/Butadien-Blockcopolymer,
alkyliertes, aromatisches Erdölkohlenwasserstoffharz und Xylol umfaßt.

11. Verfahren nach Anspruch 10, bei dem Myristinsäure in einer Konzentration von 1 % Gew./Gew. vorhanden ist, und
Styrol/Butadien-Blockcopolymer in einer Konzentration von 12 % in der Grundierungszusammensetzung vorhanden ist.

12. Verfahren nach einem der vorhergehenden Ansprüche 1 bis 9, bei dem die Vorläuferzusammensetzung Asphalt mit einem Erweichungspunkt von mindestens 80 °C umfaßt.

13. Verfahren nach Anspruch 12, bei dem die Vorläuferzusammensetzung ferner natürlichen oder synthetischen Kautschuk in einer Menge umfaßt, um etwa 15 % Gew./Gew. des Asphalts in der Grundierungszusammensetzung zu liefern.

14. Verfahren nach einem der vorhergehenden Ansprüche, bei dem die Vorläuferzusammensetzung organisches Lösungsmittel in einer Menge umfaßt, um 50 % bis 85 % Gew./Gew. organisches Lösungsmittel in der Grundierungszusammensetzung zu liefern.

15. Verfahren zur Verringerung der Penetration von Wasser durch eine Struktur oder zur Minimierung des Wassers, das mit einer Strukturoberfläche in Kontakt gelangt, bei dem
auf die Struktur eine Grundierungszusammensetzung für ein wasserabdichtendes Mittel gemäß Anspruch 1 aufgebracht wird, die auf einer nassen und trockenen Struktur verwendet werden kann und umfaßt:
C₈- bis C₁₈-Fettsäure,
Bindemittel ausgewählt aus (1) Asphalt und (2) eienm natürlichem oder synthetischem Kautschuk mit Verdünnungs- oder Füllharz, und
organisches Lösungsmittel, in dem das Bindemittel und die Fettsäure löslich sind, und
ein wasserdichtmachendes Mittel auf die Grundierung für das wasserabdichtende Mittel aufgebracht wird,
wobei, wenn die Grundierungszusammensetzung auf eine nasse Betonstruktur mit einer Abdeckungsrate von 5 bis 10 m²/l aufgebracht wird, eine 28-Tage-Bindungsfestigkeit mit dem wasserabdichtenden Mittel erzeugt wird, die mindestens 33 % der Bindungsfestigkeit ist, die erzeugt wird, wenn sie auf eine trockene Betonstruktur aufgebracht wird.

16. Verfahren nach Anspruch 15, bei dem das wasserdichtmachende Mittel eine Asphalt enthaltende, vorgeformte, mehrschichtige, flexible Folie ist.

17. Verfahren nach Anspruch 15 oder 16, bei dem die Grundierung für das wasserdichtmachende Mittel umfaßt:
C₈- bis C₁₈-Fettsäure,
natürlichen oder synthetischen Kautschuk,
Härtungsharz und
organisches Lösungsmittel, in dem die Fettsäure löslich ist.

18. Verfahren nach Anspruch 15, 16 oder 17, bei dem der Grundierungszusammensetzung für ein wasserdichtmachendes Mittel eine Zusammensetzung gemäß einem der Ansprüche 2 bis 14 ist.

19. Verfahren nach einem der Ansprüche 15 bis 18, bei dem die Grundierungszusammensetzung für eine wasserdichtmachendes Mittel umfaßt:
Asphalt mit einem Erweichungspunkt von mindestens 110 °C und Xylol in einer Konzentration von 50 bis 85 % Gew./Gew.

## Revendications (Revendications pour l'(les) Etat(s) contractant(s) suivant(s): AT, BE, CH, DE, FR, GB, GR, IT, LI, LU, NL, SE)

1. Composition de couche de base d'un agent imperméabilisant qui peut être utilisée sur des structures sèches ou mouillées et qui comprend :
(a) un acide gras C₈ à C₁₈ ;
un agent de liaison sélectionné parmi (1) l'asphalte et (2) un caoutchouc naturel ou synthétique avec une résine de dilution ou de remplissage ; et
un solvant organique dans lequel l'agent de liaison et l'acide gras sont solubles, la composition de couche de base, quand appliquée à la structure en béton mouillée à un taux de revêtement de 5 à 10 mètres carrés par litre, produisant une force de liaison à 28 jours avec un agent imperméabilisant à base d'asphalte subséquemment appliqué dont la force de liaison est d'au moins 33% de la force de liaison produite quand il est appliqué à une structure en béton sèche.

2. Composition de couche de base d'un agent imperméabilisant selon la revendication 1 dans laquelle l'agent de liaison est un caoutchouc naturel ou synthétique avec une résine de dilution ou de remplissage.

3. Composition de couche de base d'un agent imperméabilisant selon la revendication 1 ou 2 qui comprend 0,1% à 6% p/p d'un acide gras C₈ à C₁₈.

4. Composition de couche de base d'un agent imperméabilisant selon la revendication 1, 2 ou 3 qui comprend 0,1% à 3% p/p d'un acide gras C₈ à C₁₈.

5. Composition de couche de base d'un agent imperméabilisant selon l'une quelconque des revendications précédentes qui comprend 0,5 à 1,5% p/p d'un acide gras C₈ à C₁₈.

6. Composition de couche de base d'un agent imperméabilisant selon l'une quelconque des revendications précédentes dans laquelle l'acide gras C₈ à C₁₈ comprend l'acide myristique, l'acide stéarique, l'acide laurique, l'acide palmitique, ou un acide gras de talloie.

7. Composition de couche de base d'agent imperméabilisant selon l'une quelconque des revendications précédentes qui comprend un caoutchouc naturel ou synthétique sélectionné parmi un copolymère bloc de styrène-butadienne et un copolymère aléatoire de styrène-butadienne.

8. Composition de couche de base d'un agent imperméabilisant selon l'une quelconque des revendications précédentes qui comprend une résine d'hydrocarbure de pétrole aromatique alkylée.

9. Composition de couche de base d'un agent imperméabilisant selon l'une quelconque des revendications précédentes dans laquelle le solvant organique est le xylène ou une essence minérale.

10. Composition de couche de base d'un agent imperméabilisant selon la revendication 1 qui comprend :
de l'acide myristique ;
un copolymère bloc de styrène-butadienne ;
une résine d'hydrocarbure de pétrole aromatique alkylée ;
et
du xylène.

11. Composition de couche de base d'un agent imperméabilisant selon la revendication 10 dans laquelle :
l'acide myristique est présent en concentration de 1% p/p ; et
le copolymère bloc de styrène-butadienne est présent en une concentration de 12%.

12. Composition de couche de base d'un agent imperméabilisant selon l'une quelconque des revendications 1 à 9 qui comprend de l'asphalte ayant un point de ramollissement d'au moins 80°C.

13. Composition de couche de base d'un agent imperméabilisant selon la revendication 12 comprenant en outre un caoutchouc naturel ou synthétique en une quantité atteignant 15% p/p du contenu en asphalte.

14. Composition de couche de base d'un agent imperméalisant selon l'une quelconque des revendications précédentes qui comprend 50% à 85% p/p de solvant organique.

15. Méthode de réduction de la pénétration à travers une structure ou de minimisation de l'eau entrant en contact avec une surface de structure qui comprend :
l'application à la structure d'une composition de couche de base d'un agent imperméabilisant qui peut être utilisée sur des structures sèches ou mouillées et qui comprend :
un acide gras en C₈ à C₁₈ ;
un agent de liaison sélectionné parmi (1) l'asphalte et (2) un caoutchouc naturel ou synthétique avec une résine de dilution ou de remplissage ; et un solvant organique dans lequel l'agent de liaison et l'acide gras sont solubles ; et
l'application d'un agent imperméabilisant à la couche de base de l'agent imperméabilisant,
où quand la composition de la couche de base est appliquée à une structure mouillée en béton à un taux de revêtement de 5 à 10 mètres carrés par litre, elle produit une force de liaison à 28 jours avec l'agent imperméabilisant qui est d'au moins 33% de la force de liaison produite quand elle est appliquée à la structure en béton sèche.

16. Méthode selon la revendication 15 dans laquelle l'agent imperméabilisant est un feuillet flexible, multicouche, préformé, contenant de l'asphalte.

17. Méthode selon la revendication 15 ou 16 dans laquelle la couche de base d'un agent imperméabilisant comprend :
un acide gras en C₈ à C₁₈ ;
un caoutchouc naturel ou synthétique ;
une résine de durcissement ; et
un solvant organique dans lequel l'acide gras est soluble.

18. Méthode selon la revendication 15, 16 ou 17 dans laquelle la composition de couche de base de l'agent imperméabilisant est une composition selon l'une quelconque des revendications 2 à 14.

19. Méthode selon l'une quelconque des revendications 15 à 18 dans laquelle la composition de la couche de base de l'agent imperméabilisant comprend :
de l'asphalte ayant un point de ramollissement d'au moins 110°C ; et
du xylène en concentration de 50 à 85% p/p.

## Revendications (Revendications pour l'(les) Etat(s) contractant(s) suivant(s): ES)

1. Procédé de préparation d'une composition de couche de base d'un agent imperméabilisant qui peut être utilisée sur des structures sèches ou mouillées, lequel procédé comprend le mélange d'un acide gras en C₈ à C₁₈ avec une composition de précurseur comprenant :
un agent de liaison sélectionné parmi (1) l'asphalte et (2) un caoutchouc naturel ou synthétique avec une résine de dilution ou de remplissage ; et
un solvant organique dans lequel l'agent de liaison et l'acide gras sont solubles ;
la composition de couche de base, quand appliquée à une structure en béton mouillée à un taux de revêtement de 5 à 10 mètres carrés par litre, produisant une force de liaison à 28 jours avec un agent imperméabilisant à base d'asphalte subséquemment appliqué laquelle force de liaison est d'au moins 33% de la force de liaison produite quand il est appliqué à une structure en béton sèche.

2. Procédé selon la revendication 1 dans lequel l'agent de liaison est un caoutchouc naturel ou synthétique avec une résine de dilution ou de remplissage.

3. Procédé selon la revendication 1 ou 2 dans lequel un acide gras est utilisé en une quantité fournissant 0,1% à 6% p/p d'un acide gras en C₈ à C₁₈ dans la composition de couche de base.

4. Procédé selon la revendication 1, 2 ou 3 dans lequel un acide gras est utilisé en quantité fournissant 0,1% à 3% p/p d'un acide gras en C₈ à C₁₈ dans la composition de couche de base.

5. Procédé selon l'une quelconque des revendications précédentes dans lequel un acide gras est utilisé en une quantité fournissant 0,5 à 1,5% p/p d'un acide gras en C₈ à C₁₈ dans la composition de couche de base.

6. Procédé selon l'une quelconque des revendications précédentes dans lequel l'acide gras en C₈ à C₁₈ comprend l'acide myristique, l'acide stéarique, l'acide laurique, l'acide palmitique, ou un acide gras de talloie.

7. Procédé selon l'une quelconque des revendications précédentes dans lequel la composition de précurseurs comprend un caoutchouc naturel ou synthétique sélectionné parmi le copolymère bloc de styrène-butadienne et le copolymère aléatoire de styrène-butadienne.

8. Procédé selon l'une quelconque des revendications précédentes dans lequel la composition de précurseurs comprend une résine d'hydrocarbures de pétrole aromatiques alkylée.

9. Procédé selon l'une quelconque des revendications précédentes dans lequel la composition de précurseurs comprend un solvant organique qui est le xylène ou une essence minérale.

10. Procédé selon la revendication 1 qui comprend le mélange d'acide myristique avec une composition de précurseurs comprenant :
un copolymère bloc de styrène-butadienne ;
une résine d'hydrocarbures de pétrole aromatiques alkylée;
et
du xylène.

11. Procédé selon la revendication 10 dans lequel l'acide myristique est présent en une concentration de 1% p/p ; et
le copolymère bloc de styrène-butadienne est présent en une concentration de 12% dans la composition de couche de base.

12. Procédé selon l'une quelconque des revendications 1 à 9 dans lequel la composition de précurseurs comprend un asphalte ayant un point de ramollissement d'au moins 80°C.

13. Procédé selon la revendication 12 dans lequel la composition de précurseurs comprend en outre un caoutchouc naturel ou synthétique en quantité fournissant jusqu'à environ 15% p/p de l'asphalte dans la composition de couche de base.

14. Procédé selon l'une quelconque des revendications précédentes dans lequel la composition de couche de base comprend un solvant organique en une quantité fournissant 50% à 85% p/p de solvant organique dans la composition de couche de base.

15. Méthode de réduction de la pénétration de l'eau à travers une structure ou de minimisation de l'eau entrant en contact avec une surface de structure qui comprend :
l'application à la structure d'une composition de couche de base d'un agent imperméabilisant selon la revendication 1 qui peut être utilisée sur une structure mouillée ou sèche et qui comprend :
un acide gras en C₈ à C₁₈ ;
un agent de liaison sélectionné parmi (1) l'asphalte et (2) un caoutchouc naturel ou synthétique avec une résine de dilution ou de remplissage ; et un solvant organique dans lequel l'agent de liaison et l'acide gras sont solubles ; et
l'application d'un agent imperméabilisant à la couche de base de l'agent imperméabilisant,
dans laquelle quand la composition de couche de base est appliquée à une structure mouillée en béton à un taux de revêtement de 5 à 10 mètres carrés par litre, elle produit une force de liaison à 28 jours avec l'agent imperméabilisant qui est d'au moins 33% de la force de liaison produite quand elle est appliquée à la structure en béton sèche.

16. Méthode selon la revendication 15 dans laquelle l'agent imperméabilisant est un feuillet flexible, multicouche, pré-formé, contenant de l'asphalte.

17. Méthode selon la revendication 15 ou 16 dans laquelle la couche de base de l'agent imperméabilisant comprend :
un acide gras en C₈ à C₁₈ ;
un caoutchouc naturel ou synthétique ;
une résine de durcissement ; et
un solvant organique dans lequel l'acide gras est soluble.

18. Méthode selon la revendication 15, 16 ou 17 dans laquelle la composition de couche de base de l'agent imperméabilisant est une composition selon l'une quelconque des revendications 2 à 14.

19. Méthode selon l'une quelconque des revendications 15 à 18 dans laquelle la composition de couche de base de l'agent imperméabilisant comprend :
de l'asphalte ayant un point de ramollissement d'au moins 110°C ; et
du xylène en concentration de 50 à 85% p/p.
